# EUROPEAN PATENT SPECIFICATION

(11) **EP 1 588 037 B1**
(45) Date of publication and mention of the grant of the patent: **03.11.2010**
(21) Application number: 03700196.3
(22) Date of filing: 31.01.2003
(51) Int. Cl.: F02B 37/18, F02B 37/16, F02B 37/007, F01D 17/14

(54) **VALVE, IN PARTICULAR A VALVE FOR A TURBOCHARGER SYSTEM**
VENTIL, INSBESONDERE FÜR EIN TURBOLADERSYSTEM
VANNE, PLUS PARTICULIEREMENT DESTINEE A UN TURBOCOMPRESSEUR

(43) Date of publication of application: 26.10.2005
(73) Proprietor: Honeywell International Inc., Morristown, NJ 07960 (US)
(72) Inventor: FIGURA, Giorgio c/o Honeywell Garrett, F-88150 Thaon-les-Vosges (FR)
(74) Representative: TBK-Patent
(86) International application number: PCT/IB2003/000320
(87) International publication number: WO 2004/067932

(56) References cited:
- EP-A- 0 085 679
- EP-A- 0 085 679
- DE-A- 19 924 228
- DE-A- 19 960 618
- DE-A1- 19 924 228
- NL-A- 7 203 888
- NL-A- 7 203 888
- US-A- 4 125 999
- US-A- 4 499 731
- US-A- 4 766 932
- US-A- 4 766 932
- US-A- 5 611 202
- PATENT ABSTRACTS OF JAPAN vol. 006, no. 014 (M-108), 27 January 1982 (1982-01-27) & JP 56 134675 A (TOSHIBA CORP), 21 October 1981 (1981-10-21)

## Description

The present invention relates to a turbocharger system having a valve. The invention relates further to a turbocharger system in which such a two-way valve is optionally used.

Different constructions of valves have been known for gas flow control systems. Such known valves like a popet valve or a butterfly valve have a particular construction determining the closing/opening and control characteristics of the valve.

According to the prior art as disclosed in DE 19924228 A, a turbocharger comprises a valve which is realized as spool valve to control the flow of exhaust gas with respect to plural flow passages in the turbine.

The prior art according to NL 7203888 discloses a valve comprising a closing element formed as a bushing which is movable towards a circular valve seat for regulating a gas flow from an angular gas inlet chamber surrounding said bushing into a gas outlet, wherein said bushing cooperates with a valve control surface of an inner wall of said gas inlet chamber for defining a control gas passage in the initial opening phase of said valve.

The prior art according to US 4766932 discloses a further known arrangement and shows a steam flow control valve for controlling large fluid flow rates.

It is the object of the invention to provide a turbocharger boosting system in which an improved valve can be preferably used.

The object of the invention is achieved by the combination of the features defined in claim 1. Preferable embodiments of the invention are set forth in the dependent claims.

According to an alternative embodiment of the valve according to the invention there is provided a valve comprising a closing element being movable toward a circular valve seat for regulating a gas flow into a gas outlet, wherein the closing element is actuated only by an actuator without being actuated by any pressure either from the gas inlet and/or the gas outlet. By means of such embodiment, the operation of the actuator is not disturbed by any fluctuations of the pressures in the valve inlet and/or the valve outlet.

The above mentioned valve is applicable in
a method for controlling a parallel sequential turbocharger system comprising a bypass valve and a further valve for adjusting the gas flow into either one of two turbines, said method comprising a transitional control step, in which one of the valves is closed and the other one is shifted from a partially opened position to a fully opened position;
a method for controlling a turbocharger system comprising a flow adjusting valve for adjusting the gas flow into a turbine and a bypass valve arranged in a bypass passage bypassing said turbine, said method comprising a transitional control step, in which said bypass valve is closed; and
a method for controlling a parallel sequential turbocharger system comprising a flow adjusting valve for adjusting the gas flow into either one of two turbines and a bypass valve arranged in a bypass passage bypassing either one of said turbines, said method comprising a transitional control step, in which one of the valves is closed and the other one is opened.

In said transitional control step, the flow adjusting valve is preferably switched from a partially opened position to a fully opened position.

In these methods a two-way flow adjusting valve according to the present invention is used.

In the following the invention is further illustrated by examples with reference to the enclosed figures.
Fig. 1 illustrates a layout of a turbocharger boosting system in which a valve according to the invention is used;
Fig. 2 shows a partial cross-sectional view of a valve according to a first embodiment of the invention;
Fig. 3 shows the valve of Fig. 2 in its open position;
Figs. 4, 5 and 6 show different embodiments of the sealing portion "A" between two gas chambers of the valve in Figs. 2 and 3;
Figs. 7 - 10 show different embodiments of the valve seat portion "B" of the valve in Figs. 2 and 3;
Fig. 11 shows a diagram illustrating the flow/piston stroke characteristics of the different valve embodiments;
Fig. 12 shows a partial cross-sectional view of a valve according to a second embodiment of the invention;
Fig. 13 shows the valve of Fig. 12 in its open position;
Fig. 14 shows a basic layout of a sequential turbocharger system for carrying out a control method;
Fig. 15 shows a modified layout of a sequential turbocharger system for carrying out a control method;
Fig. 16 shows an illustration of the different operational phases of the valves used in the layout shown in Fig. 15;
Fig. 17 shows a further modified layout of a sequential turbocharger system for carrying out a control method;
Fig. 18 shows an illustration of the different operational phases of the valves used in the layout shown in Fig. 17;

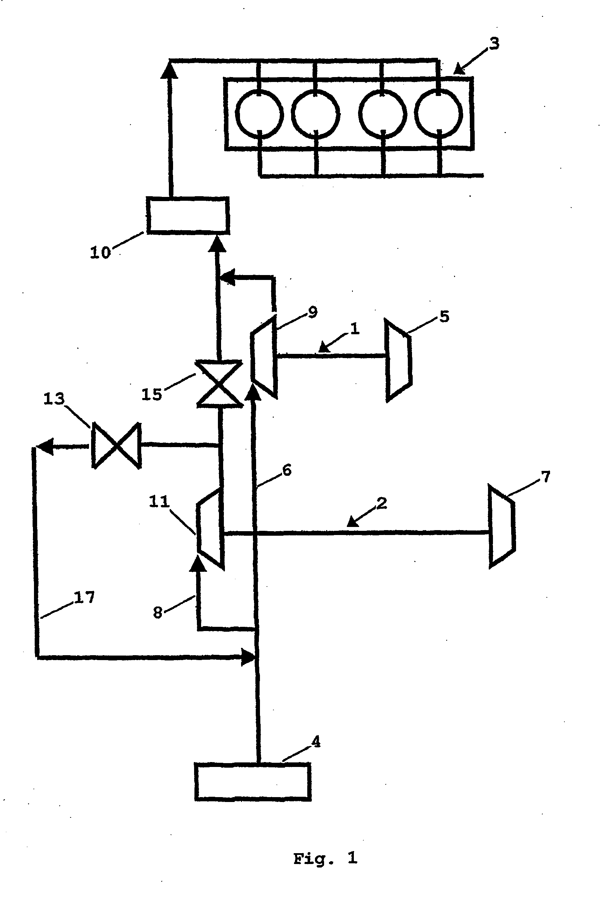

The layout of Fig. 1 shows a turbocharger boosting system of an internal combustion engine comprising a first turbocharger 1 and a second turbocharger 2, wherein at the compressor's side of the layout two compressors 9 and 11 are connected in parallel for supplying fresh air to an internal combustion engine 3. As shown in the drawing, each turbocharger is equipped with a turbine 5, 7 and a corresponding compressor 9, 11, respectively. Fresh air from an air filter 4 is fed in parallel to each of the compressors by means of a first fresh air conduit 6 and second fresh air conduit 8. The air discharged from the first compressor 9 is discharged directly through an intercooler device 10 to the intake side of the internal combustion engine 3, whereas the air discharged from the second compressor 11 is discharged through a first and second valve 13, 15 either to the intercooler device 10, or via a bypass passage 17 back to the intake side of the two compressors.

The methods of control applicable for controlling the fresh air supply to the internal combustion engine 3 require not merely a closing and opening of the valves 13, 15, but preferably specific opening/closing characteristics which are able to ensure an optimal transition between different operational modes. Furthermore, a relatively simple construction of the respective valves is of a particular advantage.

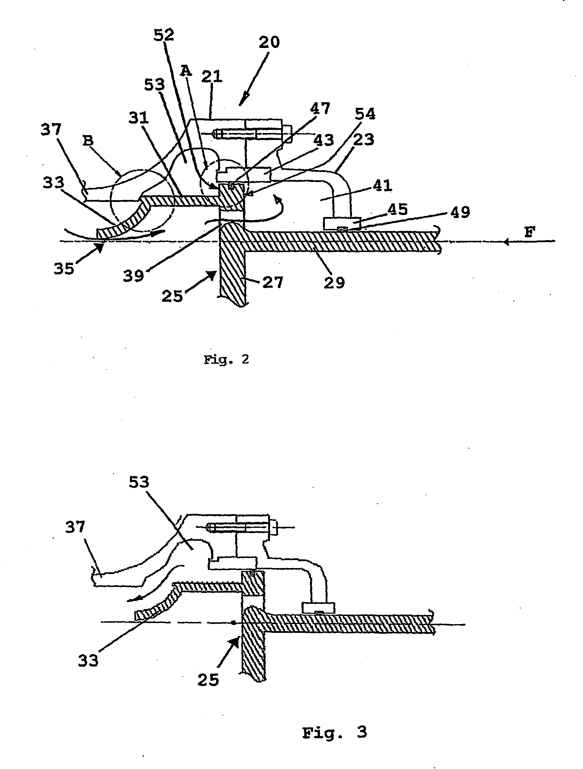

An embodiment of a valve serving the above purpose is particularly illustrated by Fig. 2. In Fig. 2 only the essential elements of the valve are shown, whereas self-evident, accessory elements of the valve have been omitted.

The embodiment of the valve shown in Fig. 2 comprises a valve housing 20 consisting of an inner shell 21 and an outer shell 23 attached to each other by circumferentially bolted flange portions. Inside the valve housing 20 there is arranged an axially displaceable valve member or piston 25. As shown in Fig. 2 the valve member comprises a disc-like central portion 27 which on the one side is connected to an axially extending rod-like portion 29, and on the other side carries a sleeve-like tubular portion 31 extending also in axial direction and ending with a concave conical portion 33. The concave conical portion 33 axially converges to form at its and a nozzle-like opening 35 communicating the inside of the tubular portion 31 with an outlet pipe 37. In the embodiment shown in Fig. 2 the inner shell 21 of the housing 20 is integrally formed with the outlet piping 37, although these elements can also be manufactured as separate elements.

The disc 27 of the displaceable valve member 25 is provided with at least one ventilation hole 39 which communicates the inside of the tubular portion 31 with a first circular pressure chamber 41 formed between the outer housing shell 23 and the disc 27. The rod 29 of the displaceable valve member 25 is connected to an actuating rod of a pneumatic or hydraulic or electric actuator which is not particularly shown in Fig. 2.

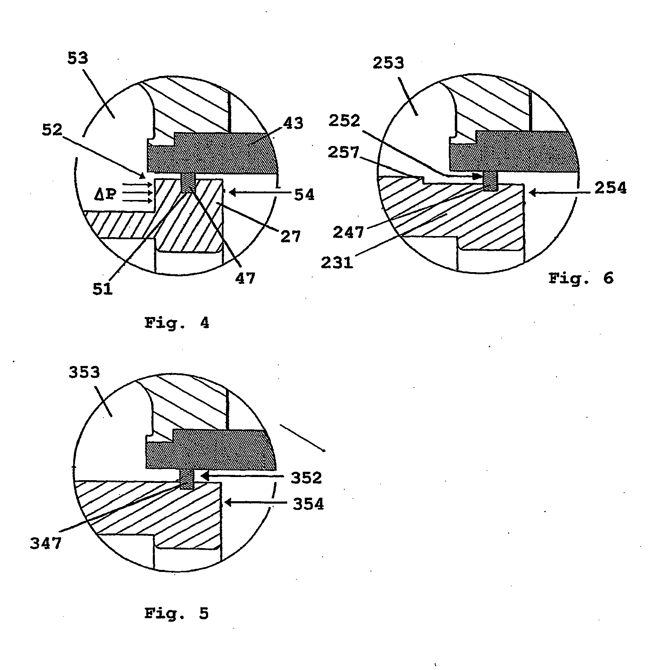

Further, the disc 27 is arranged in a piston-like manner within a first sleeve 43 which together with a second outer sleeve 45 encompassing the rod 29 axially guides the displaceable valve member 25. Both, the disc 27 and the rod 29 are abutted against the respective sleeve elements by means of sealing rings 47, 49, respectively. As is particularly shown in Fig. 4, the sealing ring 47 is interposed in a circumferential groove 51 as a piston ring slidably abutted against the sleeve 43, whereas the sealing ring 49 is interposed within another groove formed in the outer sleeve 45 and slidingly abutted against the rod 29.

As further shown in Fig. 2 between the tubular portion 31 and the inner housing shell 21 of the housing, there is defined a circular inlet chamber 53 provided with an inlet port which is not particularly illustrated in this figure. Due to the illustrated arrangement of the first pressure chamber 41 and the second pressure chamber 53 the outer periphery of the disc 27 of the displaceable valve element is exposed to the pressure difference between these chambers with the result that in this particular embodiment, a positive pressure difference ΔP as shown in Fig. 4 acts axially on the disc 27. By means of the differential pressure ΔP the valve member or piston 25 is displaced to the right in Fig. 2 against a pushing force F exercised from outside of the valve by the actuator.

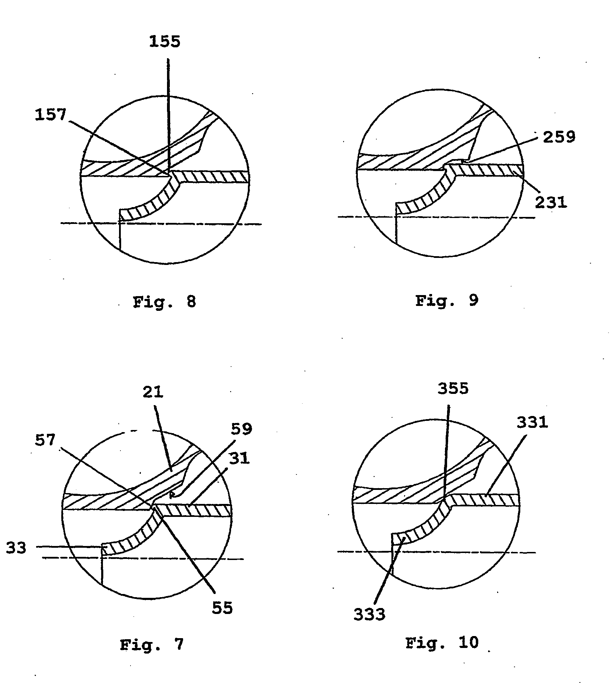

The end of the tubular portion 31 opposite to the disc 27 is provided with a circular lip 55 formed as an axial protrusion of the tubular portion 31 which co-operates with a valve seat 57 formed in the inner housing shell 21 as shown in Figs. 7 to 9. The surface of the valve seat 57 merges radially outwardly into a valve control surface 59 which in the initial opening phase of the valve forms together with the opposite lip 55 of the tubular portion 31 a control flow passage for the gas stream escaping from the second inlet chamber 53 into the outlet pipe 37. The convex portion of the conical extension 33 of the tubular portion 31 serves as a flow guiding surface for avoiding perturbations of the gas flow entering the outlet pipe 37.

The illustration of Fig. 2 shows the closed state of the valve in which the force F exercised by the actuator pushes the displaceable valve element 25 to the left in this figure with the result that the lip 55 of the tubular portion 31 is tightly abutted against the valve seat 57. Thus, the valve remains closed and there is no communication between the gas inlet chamber 53 and the outlet pipe 37.

When the pressure in the inlet chamber 53 increases, the raising pressure difference ΔP acting on the disc portion 27 reaches an amount capable of causing a displacement of the piston 25 against the force F exercised by the actuator, so that at least a slight opening of the valve is achieved. During the opening phase of the valve, the narrowest flow passage remains controlled by the distance between the lip 55 and the flow control surface 59 shown in Figs. 7 to 9. Once the displaceable valve member 25 has been shifted to the right as shown in Fig. 3 the gas can freely escape from the second pressure chamber 53 into the outlet pipe 37 along the concave conical phase of the portion 33.

Different embodiments of the valve seat arrangement are shown in Figs. 8 and 9. While the valve seat shown in Fig. 7 is formed by a conical surface 57, this seat is established in the embodiment shown in Fig. 8 by a small radially extending step portion 157 co-operating with the sealing lip 155 formed in the same way as the lip 55 in the embodiment shown in Fig. 7.

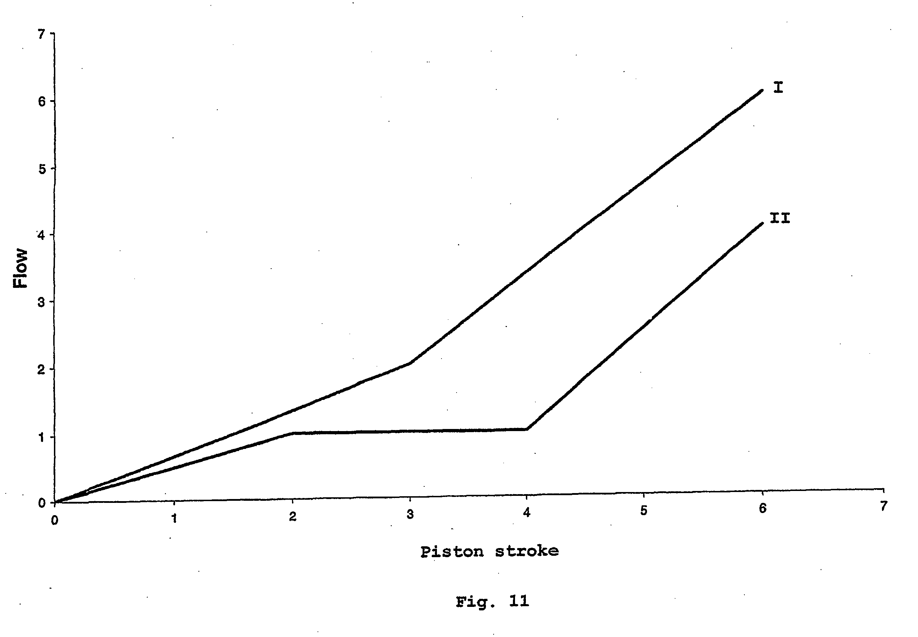

The further embodiment shown in Fig. 9 provides a flow control surface 259 extending at least partially in parallel to the tubular portion 231. In Fig. 11 the curve I shows the flow-piston stroke characteristic of the valve according to the embodiments shown in Figs. 7 and 8, whereas curve II shows the flow-piston stroke characteristic of the embodiment shown in Fig. 9.

Fig. 10 illustrates a further embodiment of the valve seat arrangement in which the portion of the displaceable valve element 25 co-operating with the valve seat is merely formed by a bent portion 355 connecting the tubular portion 331 with the concave conical portion 333.

With regard to the design of the valve's closing portion illustrated in each of figures 7 to 10, it is to be mentioned that further modifications of both, the flow control surface and the portion of the valve displaceable member co-operating with the valve seat are possible depending on the desired flow-piston stroke characteristic of the valve. A considerable advantage of the principle construction according to the present embodiment is that all co-operating portions determining the flow/piston stroke-characteristic of the valve can be easily machined for achieving a desired curvature of the flow control surface and the possible sealing lip portion of the displaceable valve member.

Figs. 5 and 6 show further embodiments of the piston actuating portion and sealing arrangement of the displaceable valve member for achieving a different response characteristic of the valve to a pressure difference between the first and second gas chambers 41 and 53. While the pressure actuated portion 52 communicated to the inlet gas chamber 53 in Fig. 4 is mainly established by a step portion of the disc 27, the same portion 252 in the embodiment shown in Fig. 6 is established only by the surface of the piston ring 247 facing the inlet gas chamber 253.

In the embodiment shown in Fig. 6 the tubular portion 231 is provided with a step portion 257 provided for modifying the response behaviour of the displaceable valve member without changing the pressure actuation direction. However according to an alternative preferable embodiment the radial surface of the step portion 257 can be machined to be greater than the side surface of the piston ring 247 facing the inlet gas chamber 253 so that the resultant pressure force is reversed and acts to the left in Fig. 6. In such embodiment the force exercised by the external actuator in Fig. 2 is also reversed so that the piston 25 is actuated and thus opened by the force exercised by the external actuator. In the embodiment shown in Fig. 6 the dimensions of the surfaces 252 and 257 serve for determining the characteristic of the actuation load versus the piston stroke for a given pressure difference ΔP applied to the valve.

In the embodiment shown in Fig. 6 the tubular portion 231 is provided with a step portion 257 provided for modifying the response behaviour of the displaceable valve member. Such a step portion can be completely removed as shown in Fig. 5. As can be gathered from the principle construction of the valve's piston portion shown in Figs. 4 to 6 the response of the displaceable valve member can be easily influenced by an appropriate machining of the tubular portion 31, 231. If for example, the surface 252 is completely balanced by the radial surface of the step portion 257, no actuation force will be exercised by the pressure in the chamber 253 on the piston, so that the piston will be retractable only by exercising the force F of the actuator.

The embodiment of the valve shown in Fig. 2 and 3 can be further modified by varying the overall construction and material of the housing 20 and the displaceable valve member 25. The displaceable valve member can be formed for example as a plunger in which respective bores are provided for communicating the outlet portion of the valve with the gas chamber within the valve's housing for establishing a desired operational differential pressure on the displaceable valve member.

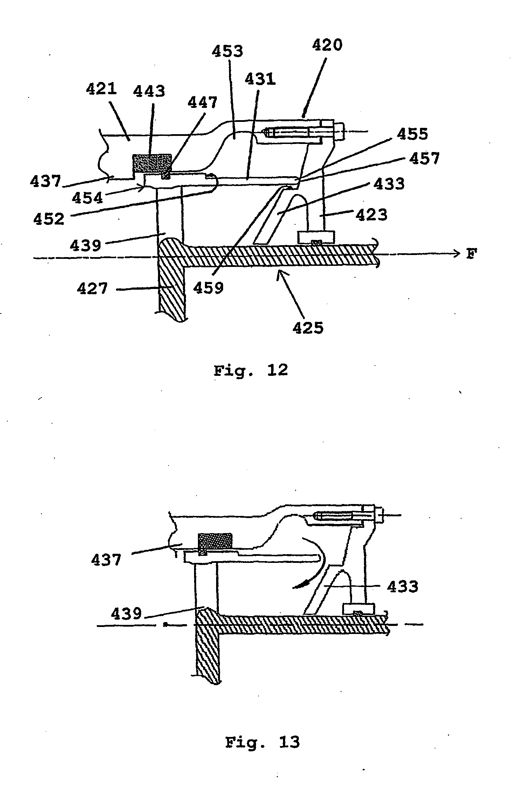

A second principal embodiment of the valve according to the invention is shown in Figs. 12 and 13 where the actuating direction of the force created by the inlet gas chamber 453 and the actuator (not shown in the Figs.), respectively, is reversed compared to the embodiment in Figs. 2 and 3.

In the second embodiment, the pressure of an inlet chamber 453 acts on a step portion 452 machined in a tubular portion 431 of a displaceable valve member 425 against a force F exercised by an actuator which is not particularly shown. By means of this force, the displaceable valve member 425 is shifted to the left as shown in Fig. 13, thus causing a retraction of a circular lip 455 of said tubular portion 431 from a valve seat 457 machined on the inner wall of an outer housing shell 423. The gas escaping from the gas inlet chamber 453 then flows along a conical guiding portion 433 representing a part of the outer housing shell 423, and the gas flow enters finally an outlet pipe 437 via at least one hole 439 formed in a disc-like portion 427 of the displaceable valve member 425. As shown in Fig. 12, a flow control surface 459 is established by an radially inwardly inclined collar portion 433 of the outer shell 423.

The surface on which a piston ring 447 inserted in a circumferential groove of the disc 427 slides on the inner wall of an inner shell 421 of the valve housing 420 is formed by a sleeve 443. The material of the sleeve 443 has an increased ware resistance and is different from the material of the housing. While the sliding surface in the embodiment shown in Figs. 2 and 3 is established by a sleeve locked between the two housing shells, the cylindrical element 443 used in the embodiment shown in Figs. 12 and 13 is molded within a rectangular recess of the outlet pipe 437 and then machined for creating an appropriate sliding surface for the piston ring 447.

The embodiment shown in Figs. 12 and 13 only illustrates a possible modification of the basic embodiment shown in Figs. 2 and 3. For the person skilled in the art it is clear that further modifications providing different locations and constructions of the valve elements are possible without departing from the principle of the invention. For example the inlet and outlet of each of the embodiments can be preferably reversed, in particular, so that the actuating force resulting from a pressure difference between the inlet and the outlet of the valve acts in the same direction of the force F, i.e. in the same direction in which the displaceable valve member is operated by the actuator. Furthermore, the valve can be easily calibrated by a simple machining of the respective elements, preferably corresponding to the operational characteristic of the actuator.

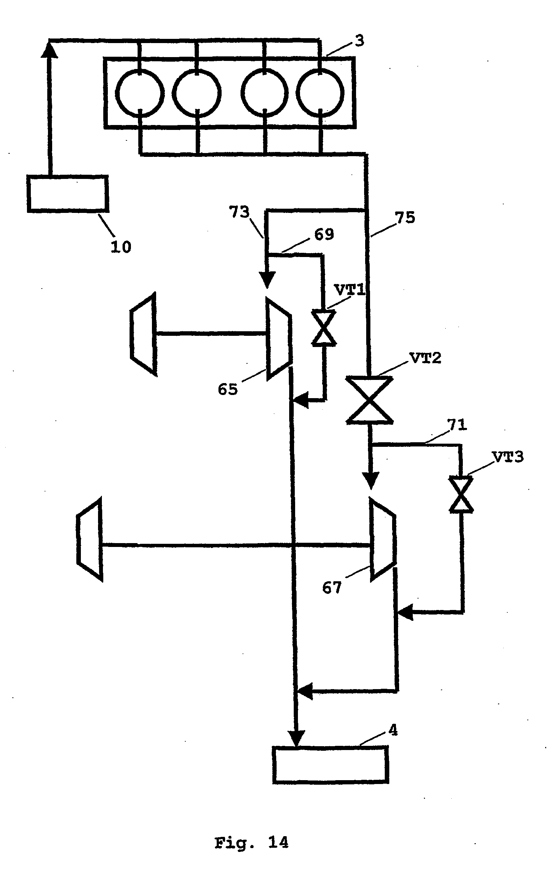

The valve described in each of the above embodiments can be also preferably used in a layout of the turbine side of a combustion engine boosting system including preferably a parallel arrangement of two turbochargers as shown in Fig. 14.

The layout shown in Fig. 14 represents a basic arrangement of three valves VT1, VT2 and VT3, wherein two of the valves VT1 and VT3 are arranged in respective bypass passages bypassing each of the turbines and a further valve VT2 is arranged in the inlet passage of the second turbine.

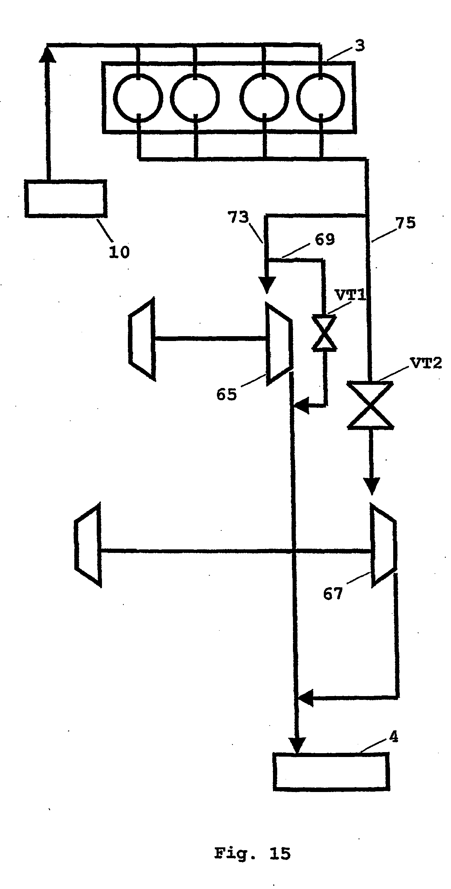

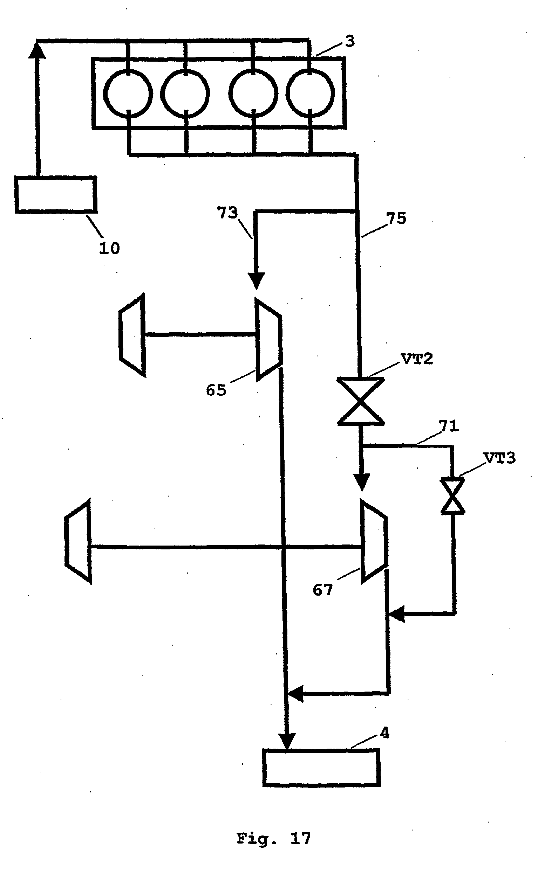

The layout of the turbine side shown in Fig. 14 and the further embodiments shown in each of Figs. 15 and 17 can preferably be combined with the layout of the compressor side of the boosting system shown in Fig. 1. Therefore, some of the particular reference signs used in Fig. 1 have been omitted in the principle sketches of Figs. 14, 15 and 17.

In the multi-turbocharger boosting system shown in Fig. 14 at each turbine 65, 67 there are provided a first bypass passage 69 and a second bypass passage 71 with corresponding first and third valves VT1 and VT3, respectively. In addition a second valve VT2 is arranged in one of two parallel passages 73, 75 feeding exhaust gas to the turbines 65, 67, namely in the passage 75 connected with a 3-way junction from which the bypass passage 71 is branched off.

In the following a basic method for controlling the turbocharger system shown in Fig. 14 will be described in which a valve according to the invention can be preferably used:
At a low exhaust gas flow rate which means at a low rotational speed of the internal combustion engine, preferably at 1000-2000 rpm, the exhaust gas supplied via the piping 73 drives the first turbine 65. The second valve VT2 remains nearly closed to make a leakage exhaust gas flow in the passage 75 to ensure an idling rotation of the second turbine 67. Under this condition, the speed of the first turbine is controlled by means of the first valve VT1. At the same time, the third valve VT3 remains optionally either closed or open.

In a transitional phase of a medium exhaust gas flow rate or rotational speed of the internal combustion engine, preferably in a range of 2000 - 2500 rpm, the first valve VT1 is controlled and the third valve VT3 is closed, or vice-versa, whereas the second valve VT2 starts slowly to open. This first step of the transitional phase is then followed by a second step of the transitional control phase in which both the first and third valve VT1 and VT3 are closed and the second valve VT2 is completely open.

In the range of a high exhaust gas flow rate or rotational speed of the internal combustion engine, preferably in a range of 2500 - 4000 rpm, the second valve VT2 remains open, whereas at least one of the first and third valve VT1 and VT3 is kept controlled in at least partially open state.

The method will be explained in the following with reference to a simplified layout structure of the sequential turbocharger system shown in Fig. 15. In this particular embodiment it is assumed that the bypass passage 71 and the third valve VT3 in the embodiment of Fig. 14 are omitted or the third valve VT3 is permanently closed.

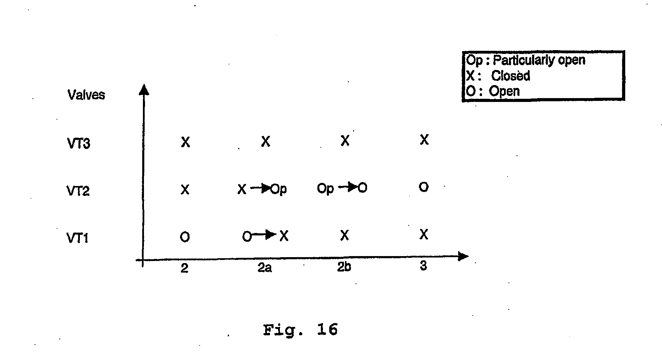

According to such a method at low exhaust gas flow rate the first valve VT1 is open and the second valve VT2 is closed, whereas at high gas flow the first valve VT1 is closed and the second valve VT2 is opened. During the transitional phase from low to high gas flow, the turbocharger control provides two transitional sub-phases or steps, namely a first transitional step (2a) and a second transitional step (2b) as illustrated by Fig. 16.

As can be understood from Fig. 16 in the first transitional step (2a) the first valve VT1 is progressively closed, while the second valve VT2 moves from its closed to a partially open state. In the second transitional step the first valve VT1 remains in its closed state, whereas the second valve VT2 which has been partially open further moves to its completely open position. Because of the second transitional step as second valve VT2 a valve according to the invention described with reference to the Figures 3 - 13 is preferably used. By means of such a valve it is possible to achieve a fine tuning of the transition from the partially open to the completely open state of the second valve which is of particular importance for the function of the second turbine 67 and the whole boosting system.

A further method is illustrated by the layout of the turbine side of the sequential turbocharger system shown in Fig. 17. Such a layout results from the basic layout shown in Fig. 14 from which the bypass passage 69 and the first valve VT1 have been removed, or in which the first valve VT1 remains permanently closed. According to the method for controlling the turbine system shown in Fig. 17 at low exhaust gas flow rates of the internal combustion engine, the second valve VT2 remains only partially open, whereas the third valve VT3 is completely open. At high gas flow rates the second valve VT2 changes to a completely open state, whereas the third valve VT3 is closed.

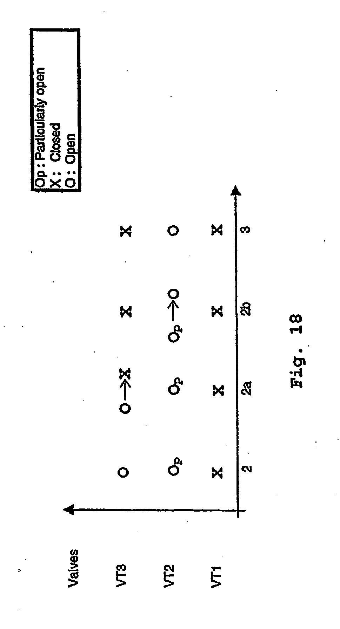

During a transitional phase including the steps (2a) and (2b) shown in Fig. 18, the third valve VT3 is immediately closed already in the first transitional step, whereas the second valve VT2 remains partially open at the first transitional step and then at its second transitional step (2b) it is further shifted to its completely open position. A valve described with reference to the Figures 2 to 13 is preferably used as a second valve VT2 because of the possibility for achieving a desired flow/piston stroke - characteristic for appropriately controlling the gas flow via the second valve VT2 during the second transitional step.

The invention is not limited to the examples described above with reference to the Figures 1 to 18. The favorable construction and function of the valve illustrated by the Figures 2 - 13 makes it preferable to use this valve also for carrying out different control methods for the compressor side of a turbocharger boosting system, for example for the one shown in Fig. 1.

## Claims

1. A turbocharger system for an internal combustion engine (3) comprising a valve (VT2; VT3) comprising a closing element (25; 425) formed as a bushing, being movable toward a circular valve seat (57; 157; 457) for regulating a gas flow from an annular gas inlet chamber (53; 353; 453) surrounding said bushing into a gas outlet (37; 437), **characterized in that** said bushing cooperates with a valve control surface (59; 459) of an inner wall of said gas inlet chamber (53; 353; 453) for defining a control gas passage in the initial opening phase of said valve (VT2; VT3) and with said valve seat (57; 157; 457) for closing said gas passage.

2. A turbocharger system according to claim 1, wherein said bushing is movable by means of a pressure difference (ΔP) between said gas inlet (53; 253; 453) and said gas outlet (37; 437) acting on an actuated portion (52; 252; 352; 452) of said bushing.

3. A turbocharger system according to claim 2, wherein said actuated portion (52; 252; 352; 452) is different from a portion of said closing element (25; 425) cooperating with the valve seat (57; 157; 457) and the closing element is retracted from or pushed to said valve seat (57; 157; 457).

4. A turbocharger system according to claim 2 or 3, wherein said closing element (25; 425) is connected to an actuator and said pressure difference acts against or in the same direction of the force exercised by the actuator.

5. A turbocharger system according to one of claims 2 to 4, wherein said actuated portion (252; 452) is formed as a radial step portion of said bushing.

6. A turbocharger system according to one of claims 1 to 5, wherein said valve (VT2) is arranged in an inlet passage (75) of a turbine (67).

7. A turbocharger system according to claim 6, further comprising a passage (71) by-passing said turbine (67) and being provided with a further valve (VT3).

8. A turbocharger system according to claim 7, comprising at least two turbochargers (1, 2) arranged in parallel, wherein said turbine (67) of one of the turbochargers (1, 2)is a variable geometry turbine with variable nozzle passages supplying exhaust gas to a turbine wheel of said turbine (67).

## Patentansprüche

1. Turboladersystem für eine Brennkraftmaschine (3) mit einem Ventil (VT2; VT3), das ein Schließelement (25; 425) aufweist, welches als eine Buchse ausgebildet ist, und das in Richtung zu einem kreisförmigen Ventilsitz (57; 157; 457) hin bewegbar ist, um eine Gasströmung von einer ringförmigen Gaseinlasskammer (53; 353; 453), die die Buchse umgibt, in einen Gasauslass (37; 437) zu regulieren, **gekennzeichnet dadurch, dass** die Buchse mit einer Ventilsteuerfläche (59; 459) einer Innenwand der Gaseinlasskammer (53; 353; 453) zum Festlegen eines Steuergasdurchgangs in der anfänglichen Öffnungsphase des Ventils (VT2; VT3) und mit dem Ventilsitz (57; 157; 457) zum Schließen des Gasdurchgangs zusammenwirkt.

2. Turboladersystem nach Anspruch 1, wobei die Buchse unter Verwendung eines Druckunterschieds (ΔP) zwischen dem Gaseinlass (53; 253; 453) und dem Gasauslass (37; 437) bewegbar ist, der auf einen Betätigungsabschnitt (52; 252; 352; 452) der Buchse wirkt.

3. Turboladersystem nach Anspruch 2, wobei der Betätigungsabschnitt (52; 252; 352; 452) von einem Abschnitt des Schließelements (25; 425) verschieden ist, der mit dem Ventilsitz (57; 157; 457) zusammenwirkt, und wobei das Schließelement von dem Ventilsitz (57; 157; 457) zurückgezogen oder zu diesem hingedrückt wird.

4. Turboladersystem nach Anspruch 2 oder 3, wobei das Schließelement (25; 425) mit einem Aktor verbunden ist und die Druckdifferenz gegen oder in dieselbe Richtung der Kraft wirkt, die durch den Aktor ausgeübt wird.

5. Turboladersystem nach einem der Ansprüche 2 bis 4, wobei der Betätigungsabschnitt (252; 452) als ein radialer Stufenabschnitt der Buchse ausgebildet ist.

6. Turboladersystem nach einem der Ansprüche 1 bis 5, wobei das Ventil (VT2) in einem Einlassdurchgang (75) einer Turbine (67) angeordnet ist.

7. Turboladersystem nach Anspruch 6, das des Weiteren einen Durchgang (71) aufweist, der die Turbine (67) umgeht und mit einem weiteren Ventil (VT3) versehen ist.

8. Turboladersystem nach Anspruch 7, mit wenigstens zwei Turboladern (1, 2), die parallel angeordnet sind, wobei die Turbine (67) von einem der Turbolader (1, 2) eine Turbine mit variabler Geometrie mit variablen Düsendurchgängen ist, die Abgas zu einem Turbinenrad der Turbine (67) zuführen.

## Revendications

1. Système de turbocompresseur pour un moteur à combustion interne (3) comprenant une soupape (VT2 ; VT3) comprenant un élément de fermeture (25 ; 425) en forme de douille, déplaçable vers un siège de soupape circulaire (57 ; 157 ; 457) pour réguler un écoulement de gaz provenant d'une chambre d'entrée de gaz annulaire (53 ; 353 ; 453) entourant ladite douille dans une sortie de gaz (37 ; 437), **caractérisé en ce que** ladite douille coopère avec une surface de commande de soupape (59 ; 459) d'une paroi interne de ladite chambre d'entrée de gaz (53 ; 353 ; 453) pour définir un passage de gaz de commande dans la phase d'ouverture initiale de ladite soupape (VT2 ; VT3) et avec ledit siège de soupape (57 ; 157 ; 457) pour fermer ledit passage de gaz.

2. Système de turbocompresseur selon la revendication 1, dans lequel ladite douille est déplaçable au moyen d'une différence de pression (ΔP) entre ladite entrée de gaz (53 ; 253 ; 453) et ladite sortie de gaz (37 ; 437) agissant sur une portion actionnée (52 ; 252 ; 352 ; 452) de ladite douille.

3. Système de turbocompresseur selon la revendication 2, dans lequel ladite portion actionnée (52 ; 252 ; 352 ; 452) est différente d'une portion dudit élément de fermeture (25 ; 425) coopérant avec le siège de soupape (57 ; 157 ; 457) et l'élément de fermeture est éloigné dudit ou poussé vers ledit siège de soupape (57 ; 157 ; 457).

4. Système de turbocompresseur selon la revendication 2 ou 3, dans lequel ledit élément de fermeture (25 ; 425) est connecté à un actionneur et ladite différence de pression agit à l'encontre de, ou dans la même direction que la force exercée par l'actionneur.

5. Système de turbocompresseur selon l'une quelconque des revendications 2 à 4, dans lequel ladite portion actionnée (252 ; 452) est formée sous forme de portion radiale étagée de ladite douille.

6. Système de turbocompresseur selon l'une quelconque des revendications 1 à 5, dans lequel ladite soupape (VT2) est agencée dans un passage d'entrée (75) d'une turbine (67).

7. Système de turbocompresseur selon la revendication 6, comprenant en outre un passage (71) contournant ladite turbine (67) et étant pourvu d'une soupape supplémentaire (VT3).

8. Système de turbocompresseur selon la revendication 7, comprenant au moins deux turbocompresseurs (1, 2) agencés en parallèle, ladite turbine (67) de l'un des turbocompresseurs (1, 2) étant une turbine à géométrie variable avec des passages de buse variables fournissant du gaz d'échappement à une roue de turbine de ladite turbine (67).
